# EUROPEAN PATENT APPLICATION

(11) **EP 2 838 000 A1**
(43) Date of publication of application: **18.02.2015**
(21) Application number: 14173057.2
(22) Date of filing: 18.06.2014
(51) Int. Cl.: G06F 3/048, G06F 3/0485, G06F 3/0488, G06F 3/0483

(54) **Method of Displaying Page and Electronic Device Implementing the Same**

(30) Priority: 28.06.2013 KR 20130076007
(71) Applicant: Samsung Electronics Co., Ltd, Gyeonggi-do 443-742 (KR)
(72) Inventor: Choi, Youngberm, 443-742 Gyeonggi-do (KR); Kim, Hyoungil, 443-742 Gyeonggi-do (KR)
(74) Representative: Jenkins, Richard Gavin

(57) **Abstract**

An electronic device comprising a touch screen and displaying a page (410) in response to a scroll (440) by a user is provided. A method of displaying a page (410) includes displaying a part of the page (411) and interfaces (420, 430) indicating remaining parts of the page above (412) and below (413) the part on the screen, recognizing a scroll input (440) for the part of the page through the touch panel, and displaying another part of the page in response to the scroll (440) and changing one of the interfaces (420, 430) to be thicker and the other to be thinner based on a direction of the scroll input (440).

## Description

### TECHNICAL FIELD

The present disclosure relates to an electronic device having a touch screen. More particularly, the present disclosure relates to an electronic device displaying a page in response to a scroll input by a user.

### BACKGROUND

In general, electronic devices such as a smart phone, a tablet Personal Computer (PC) and the like may display pages (for example, an electronic document, an e-book, a webpage and the like) on a screen. At this time, the page may be larger than the screen and, accordingly, only a portion of the page may be displayed. The electronic device may move the page in response to a user's input (for example, a scroll on a touch screen) by a touch input means (for example, a finger, a pen or the like) and display a different portion of the page.

The above information is presented as background information only to assist with an understanding of the present disclosure. No determination has been made, and no assertion is made, as to whether any of the above might be applicable as prior art with regard to the present disclosure.

### SUMMARY

A page is vertically long and a portion of the page may be displayed on a screen when the page width fits the screen width. Accordingly, the user has a difficulty in recognizing an overall size of the page. Further, the user has a difficulty in recognizing which part of the page corresponds to the displayed part. Meanwhile, an electronic device may display a beginning part or an end part of the page in response to a scroll by the user. However, when the page is long, the user is encumbered to repeat the scroll many times.

Aspects of the present disclosure are to address at least the above-mentioned problems and/or disadvantages and to provide at least the advantages described below. Accordingly, an aspect of the present disclosure is to provide a method and an apparatus which allow an overall size of the page and a position of a currently displayed part to be recognized. Another aspect of the present disclosure is to provide a method and an apparatus which enable an easy movement to a beginning part or an end part of the page. Still another aspect of the present disclosure is to provide a method and an apparatus which outputs visual feedback of a beginning part and an end part of the page.

In accordance with an aspect of the present disclosure, a method of displaying a page of an electronic device having a touch panel installed in a screen is provided. The method includes displaying a part of the page and interfaces indicating remaining parts of the page above and below the part on the screen, recognizing a scroll input for the part of the page through the touch panel, and displaying another part of the page in response to the scroll and changing one of the interfaces to be thicker and the other to be thinner based on a direction of the scroll input.

In accordance with another aspect of the present disclosure, a method of displaying a page of an electronic device having a touch panel installed in a screen is provided. The method includes transforming one of a beginning part and an end part of the page and displaying the transformed part on the screen, recognizing a scroll input in a direction opposite to the displayed transformed part through the touch panel and reconstructing the displayed transformed part in response to the scroll input in the opposite direction and displaying the reconstructing part on the screen.

In accordance with another aspect of the present disclosure, an electronic device is provided. The electronic device includes a display unit having a touch panel installed in a screen, a memory configured to store a display control module set to control an operation of displaying a part of the page and interfaces indicating remaining parts above and below the part on the screen, an operation of recognizing a scroll input for the part of the page through the touch panel, and an operation of displaying another part of the page in response to the scroll input and changing one of the interfaces to be thicker and the other to be thinner based on a direction of the scroll input, and a processor for executing the display control module.

In accordance with another aspect of the present disclosure, an electronic device is provided. The electronic device includes a display unit having a touch panel installed in a screen, a memory configured to store a display control module set to control an operation of transforming one of a beginning part and an end part of a page and displaying the transformed part on the screen, an operation of recognizing a scroll input in a direction opposite to the displayed transformed part through the touch panel, and an operation of reconstructing the displayed transformed part in response to the scroll input and displaying the reconstructing part on the screen, and a processor for executing the display control module.

The method and the apparatus according to the present disclosure may provide an overall size of the page and a position of a currently displayed part to the user. Further, the present disclosure may provide a method and an apparatus which enables easy movement to a beginning part or to an end part of the page. In addition, the present disclosure may provide a method and an apparatus which output visual feedback of a beginning part and an end part of the page.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to an embodiment of the present disclosure;
FIG. 2 is a flowchart of an example process of displaying dynamic control interfaces according to an embodiment of the present disclosure;
FIG. 3 is a flowchart of another example process of displaying dynamic control interfaces according to an embodiment of the present disclosure;
FIGS. 4A, 4B, and 4C are screens displaying dynamic control interfaces according to an embodiment of the present disclosure;
FIG. 5 is a flowchart of an example process of displaying a beginning part and an end part of a page according to an embodiment of the present disclosure;
FIG. 6 is a flowchart of an example process of displaying a folded part of the page in an unfolded form according to an embodiment of the present disclosure;
FIGS. 7A, 7B, 7C, and 7D are screens illustrating folding a beginning part of the page in a form as if paper is folded many times and then unfolding the beginning part of the page according to an embodiment of the present disclosure;
FIG. 8 is a screen illustrating a folded end part of a page according to an embodiment of the present disclosure;
FIGS. 9A, 9B, and 9C are views illustrating reconstructing a reduced beginning part of a page to an original size according to an embodiment of the present disclosure; and
FIGS. 10A, 10B, and 10C are views illustrating overlapping a beginning part of a page in a form as if cards overlap each other and then spreading the beginning part according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic device according to the present disclosure has a touch screen and may be a computing device such as a smart phone, a camera, a tablet Personal Computer (PC), a notebook PC, a desktop PC, a media player (for example, MP3 player), a Personal Digital Assistance (PDA), a terminal for a game, a wearable computer (for example, watch or glasses) or the like. Further, the electronic device according to the present disclosure may be home appliances (for example, refrigerator, a television, and washing machine or the like) equipped with the computing device therein.

The electronic device according to the present disclosure may display a part of the page, that is, a dynamic front control interface (hereinafter referred to as an "front interface") and a dynamic rear control interface (hereinafter referred to as a "rear interface") on a page screen. The page screen may be an entire screen of the electronic device. Further, the page screen may be a portion of the screen of the electronic device.

The front interface indicates a residual amount of a front side of the part of the displayed page and the rear interface indicates a residual amount of a rear side of the part of the displayed page. The front interface is displayed on an upper end of the page screen, the rear interface is displayed on a lower end of the page screen, and the portion of the page may be displayed between the front interface and the rear interface. When a beginning part of the page is displayed, the front interface may disappear. When an end part of the page is displayed, the rear interface may disappear.

When the page moves upward, that is, when the displayed part is changed from the top to the bottom as the user scrolls in the upward direction on the screen, the front interface may become thicker and the rear interface may relatively become thinner. Further, when the page moves downward, the front interface becomes thinner and the rear interface becomes thicker. At this time, a sum of thicknesses of the rear interface and the front interface may be always the same regardless of a position of the displayed part. Further, the thickness of the interface may be proportional to a length of the page. That is, as the page is longer, the interface may become thicker.

When the user selects the front interface, for example, when the user taps the front interface by using a touch input device (for example, a finger, a pen or the like), the electronic device may display a beginning part of the page in response. Further, when the user selects the rear interface, the electronic device may display an end part of the page in response.

The electronic device according to the present disclosure may display the beginning part of the page in a first form and display the beginning part of the page in a second form in response to the scroll of the user. The first form may be a transformed form such as folded paper and the second form may be a form reconstructed to the size that is related the other part. Further, the first form may be a form smaller than a preset size. In addition, the first form may be a form such as a plurality of overlapping cards. The electronic device may display the end part of the page in a first form and display the end part of the page in a second form in response to the scroll of the user.

Further, the electronic device may display the beginning part of the page in the second form and display the beginning part of the page in the first form in response to the scroll of the user. In addition, the electronic device may display the end part of the page in the second form and display the end part of the page in the first form in response to the scroll of the user.

Hereinafter, various embodiments of the present disclosure will be described in detail with reference to the accompanying drawings. In describing the various embodiments, descriptions of technologies which are already known to those skilled in the art and are not directly related to the present disclosure may be omitted. Further, detailed descriptions of components having substantially the same configuration and function may be omitted. In the drawings, some of the components may be exaggerated, omitted, or schematically illustrated.

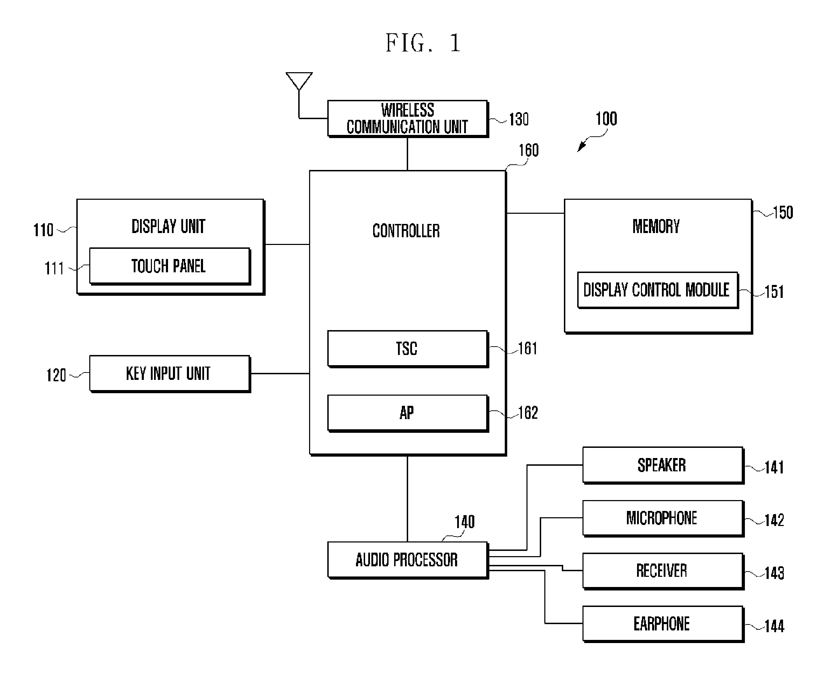

FIG. 1 is a block diagram of an electronic device according to an embodiment of the present disclosure.

Referring to FIG. 1, an electronic device 100 may include a display unit 110, a key input unit 120, a wireless communication unit 130, an audio processor 140, a speaker 141, a microphone 142, a receiver 143, an earphone 144, a memory 150, and a controller 160.

The display unit 110 may display various pieces of information on a screen under a control of the controller 160, particularly, an Application Processor (AP) 162. For example, the display unit 110 may display a part of the page, a front interface, and a rear interface on the screen. The screen may be referred to as a name related to a target image to be displayed. For example, a screen displaying a lock image may be referred to as a lock screen, a screen displaying a home image may be referred to as a home screen, and a screen displaying an execution image of an application may be referred to as a an execution screen. An image showing a status (for example, whether an alarm is set, whether Wireless-Fidelity (Wi-Fi) is connected, whether 4G is connected, a residual amount of a battery and the like) of the electronic device 100 may be referred to as a status screen. Particularly, a screen displaying a webpage, an e-book page, an electronic document, an e-mail or the like may be referred to as the page screen as described above. Meanwhile, the display unit 110 may be implemented by a Liquid Crystal Display (LCD), an Active Matrix Organic Light Emitted Diode (AMOLED), a flexible display, or a transparent display.

A touch panel 111 may be installed in the screen of the display unit 110. That is, the display unit 110 may include the touch panel 111 that operates as an input unit. For example, the touch panel 111 may be implemented on the screen of the display unit 110, or an on-cell type or an in-cell type inserted into the display unit 110.

The touch panel 111 may include a hand touch panel that senses a capacitance. The hand touch panel may include a plurality of scan input ports (hereinafter referred to as scan ports) and a plurality of detection output ports (hereinafter referred to as detection ports). The hand touch panel may generate detection information (for example, a change amount of capacitance) in response to a touch of a conductive object (for example, a finger) by a scan control signal and transmit the detection information to the touch screen controller through the detection port.

The touch panel 111 may include a pen touch panel, which may be referred to as a digitizer sensor substrate. The pen touch panel may be implemented to sense an Electro-Magnetic Resonance (EMR). Accordingly, the touch panel 111 may generate detection information in response to an indirect touch (that is, hovering) or a touch of a pen manufactured for forming a magnetic field. The touch panel 111 may transmit the generated detection information to the touch screen controller of the controller 160. The pen touch panel may include a button. For example, when the user presses the button, a magnetic field generated in a coil of the pen may be changed. The pen touch panel may generate detection information in response to the change in the magnetic field and transmit the generated detection information to the touch screen controller of the controller 160.

The key input unit 120 may include at least one touch key that senses a capacitance. The touch key may generate a key event in response to a touch of the conductive object and transmit the generated key event to the controller 160. The key input unit 120 may further include any suitable type of key. For example, the key input unit 120 may include at least one dome key. When the user presses the dome key, the dome key input is transformed to contact a printed circuit board, and accordingly, a key event is generated on the printed circuit board and transmitted to the controller 160. Meanwhile, the key of the key input unit 120 may be called a hard key and the key displayed on the display unit 110 may be called a soft key.

The wireless communication unit 130 may perform a voice call, a video call, or data communication with an external device through a network. For example, the wireless communication unit 130 may access the external device (for example, a server) to download the page and transmit the page to the controller 160. Then, the controller 160 may store the downloaded page in the memory 150. Further, the controller 160 may control the display unit 110 to display a part of the stored page and any necessary interface components on the screen. Meanwhile, the wireless communication unit 130 may include a mobile communication module (for example, 3-generation mobile communication module, 3.5-generation mobile communication module, 4-generation mobile communication module or the like), a digital broadcasting module (for example, Digital Multimedia Broadcasting (DMB) module), and a short-range communication module (for example, Wi-Fi module, Bluetooth module, a Bluetooth module, or a Near Field Communication (NFC) module).

The audio processor 140 may be combined with the speaker 141, the microphone 142, the receiver 143, and the earphone 144 to input and output audio signals (for example, voice data) for a voice recognition, a voice recording, a digital recording, and a call. The audio processor 140 receives an audio signal (for example, voice data) from the controller 160, converts the received digital audio signal to an analog signal, amplifies the analog signal, and then outputs the analog signal to the speaker 141, the receiver 143, or the earphone 144. The earphone 144 can be selectively connected to the electronic device 100 through an ear jack. When the earphone 144 is connected to the audio processor 140, the audio processor 140 may output an audio signal to the earphone 144. During a speaker mode call, the audio processor 140 may output an audio signal to the speaker 141. During a receiver mode call, the audio processor 140 may output an audio signal to the receiver 143. The speaker 141, the receiver 143, and the earphone 144 convert an audio signal received from the audio processor 140 to a sound wave and output the sound wave. The microphone 142 converts a sound wave transmitted from a human or another sound source to an audio signal. Meanwhile, the earphone 144 may be a four pole earphone, that is, an earphone having a microphone. The audio processor 140 converts an analog audio signal received from the microphone 142 or the microphone of the earphone 144 into a digital signal and then transmits the digital signal to the controller 160.

When a folded part of the page is unfolded, the audio processor 140 may reproduce an auditory feedback (for example, voice data or sound data) related to the unfolding operation. Further, when an unfolded part is folded, the audio processor 140 may reproduce an auditory feedback related to the folding operation. When a beginning part of the page is displayed as the user selects the front interface, the audio processor 140 may reproduce an auditory feedback related to the displaying operation. When an end part of the page is displayed as the user selects the rear interface, the audio processor 140 may reproduce an auditory feedback related to the displaying operation.

The memory 150 may store data generated according to an operation of the electronic device 100 or data received from an external device through the wireless communication unit 130. The memory 150 may include a buffer as a temporary data storage region. The memory 150 may store various pieces of setting information (for example, screen brightness, whether to generate a vibration when a touch is generated, whether to automatically rotate a screen and the like) for setting a use environment of the electronic device 100. Accordingly, the controller 160 may operate the electronic device 100 with reference to the setting information.

The memory 150 may store various programs for operating the electronic device 100, for example, a booting program, one or more operating systems, and applications. Particularly, the memory 150 may store a display control module 151.

The display control module 151 may be a program allowing the controller 160 (for example, the application processor) to control an operation displaying a part of the page, displaying interfaces for navigating the page and providing visual feedback with respect to the page position, an operation moving the page to display another part in response to a scroll on a part of the displayed page, and an operation changing a thickness of each of the interfaces based on a direction and a movement distance of the scroll. The display control module 151 may be an application or a component of the operating system.

Further, the display control module 151 may be set to control an operation displaying a beginning part of the page in response to a user selection of the front interface and an operation displaying an end part of the page in response to a user selection of the rear interface.

The display control module 151 may display the beginning part of the page in a first form (for example, a transformed form such as folded paper, a reduced form, a transformed form such as overlapping cards or the like), display the beginning part in a second form (for example, a form reconstructed as the same size that those of other parts) in response to a first scroll, display the end part of the page in a first form, and display the end part in a second form in response to a second scroll. The display control module 151 may display the beginning part or the end part of the page in the second form and display the beginning part or the end part of the page in the first form in response to the scroll.

The memory 150 may include a main memory and a secondary memory. The main memory may be implemented by, for example, a Random Access Memory (RAM). The secondary memory may be implemented by a disc, a RAM, a Read Only Memory (ROM), or a flash memory. The main memory may store various programs loaded from the secondary memory, for example, a booting program, an operating system, and applications. When power of a battery is supplied to the controller 160, the booting program may be first loaded into the main memory. The booting program may load the operating system into the main memory. The operating system may load the application to the main memory. The controller 160 (for example, the AP) may access the main memory to decode a command (routine) of the program and execute a function according to a decoding result. That is, the various programs may be loaded into the main memory and operate as processes.

The controller 160 controls general operations of the electronic device 100 and a signal flow between internal components of the electronic device 100, performs a function of processing data, and controls power supply to the components from the battery. The controller 160 may include a Touch Screen Controller (TSC) 161 and an AP 162.

The TSC 161 may receive detection information from the touch panel 111, analyze the received detection information, and recognize generation of pressing of a touch, a hovering, or a pen. The TSC 161 may determine a hovering area on the touch screen in response to the hovering and calculate a hovering coordinate (x_hovering and y_hovering) in the hovering area. The TSC 161 may transmit a hovering event including the calculated hovering coordinate to the AP 162. Further, the hovering event may include a depth value. For example, the hovering event may include a three dimensional hovering coordinate (x, y, and z). Here, a z value may refer to the depth. The TSC 161 may determine a touch area on the touch screen in response to the touch and calculate a touch coordinate (x_touch and y_touch) in the touch area. The TSC 161 may transmit the touch event including the calculated touch coordinate to the AP 162. The TSC 161 may transmit a pen button event to the AP 162 in response to pressing of the pen button.

The AP 162 may receive a touch screen event (for example, a hovering event, a touch event, a pen button event or the like) from the TSC 161 and perform a function corresponding to the touch screen event.

When the hovering coordinate is received from the TSC 161, the AP 162 may determine that a touch input device hovers on the touch screen. When the hovering coordinate is not received from the touch panel 111, the AP 162 may determine that the hovering of the touch input device is released from the touch screen. Further, when the hovering coordinate is changed and a changed amount of the hovering coordinate exceeds a preset movement threshold, the AP 162 may determine that a hovering movement of the touch input device is generated. The AP 162 may calculate a position change amount (dx and dy) of the touch input device, a movement speed of the touch input device, and a trace of the hovering movement in response to the hovering movement of the touch input device. Further, the AP 162 may determine a hovering gesture for the touch screen based on the hovering coordinate, whether the hovering of the touch input device is released, whether the touch input device moves, the position change amount of the touch input device, the movement speed of the touch input device, and the trace of the hovering movement. The hovering gesture may include, for example, a drag, a flick, a pinch in, a pinch out, and a scroll.

When the touch coordinate is received from the TSC 161, the AP 162 may determine that the touch input device touches the touch panel 111. When the touch coordinate is not received from the touch panel 111, the AP 162 may determine that the touch of the touch input device is released from the touch screen. Further, when a touch coordinate is changed and a change amount of the touch coordinate exceeds a preset movement threshold, the AP 162 may determine that a touch movement of the touch input device is generated. The AP 162 may calculate a position change amount (dx and dy) of the touch input device, a movement speed of the touch input device, and a trace of the touch movement in response to the touch movement of the touch input device. Further, the AP 162 may determine a touch gesture for the touch screen based on the touch coordinate, whether the touch of the touch input device is released, whether the touch input device moves, the position change amount of the touch input device, the movement speed of the touch input device, and the path of the touch movement. The touch gesture may include a touch, a multi-touch, a tap, a double tap, a long tap, a drag, a flick, a press, a pinch in, a pinch out, and a scroll.

The AP 162 may receive a key event from the key input unit 120 and perform a function corresponding to the key event.

The AP 162 may execute various types of programs stored in the memory 150. That is, the AP 162 may load various types of programs into the main memory from the secondary memory and operate the programs as processes. Particularly, the memory 162 may execute the display control module 151 as a process. Further, the AP 162 may simultaneously process (that is, multitask) the programs.

Meanwhile, the controller 160 may further include various processors. For example, the controller 160 may include a Graphic Processing Unit (GPU) that processes graphics. When the electronic device 100 includes a mobile communication module (for example, a 3-generation mobile communication module, a 3.5-generation mobile communication module, a 4-generation mobile communication module or the like), the controller 160 may further include a Communication Processor (CP) that processes the mobile communication. The aforementioned processors may be integrated into one package that also includes a processor having two or more independent cores (for example, quad-core) in a single integrated circuit. For example, the AP 162 may be integrated into one multi-core processor. The aforementioned processors may be a System on Chip (SoC). Further, the aforementioned processors may be packaged as a multi-layer integrated circuit (i.e., the integrated circuits are vertically stacked).

Meanwhile, the electronic device 100 may further include components which have not been mentioned above, such as a Global Positioning System (GPS) reception module, a vibration motor, a camera, an acceleration sensor, a gyro sensor, a proximity sensor and the like. For example, when the electronic device 100 is set to be in an automatic rotation mode, the controller 160 may analyze detection information collected from sensors to calculate an orientation of the electronic device 100 and determine to display in a landscape mode or a portrait mode using the calculated value. Of course, the display mode may be set as one of the two modes regardless of the orientation of the electronic device 100. A longer side of the screen may be referred to as a horizontal line and a shorter side may be referred to as a vertical line. When the display mode is the landscape mode, a width of the screen becomes the horizontal line and a part of the page may be vertically displayed on the screen. When the display mode is the portrait mode, the width of the screen becomes the vertical line and a part of the page may be horizontally displayed on the screen.

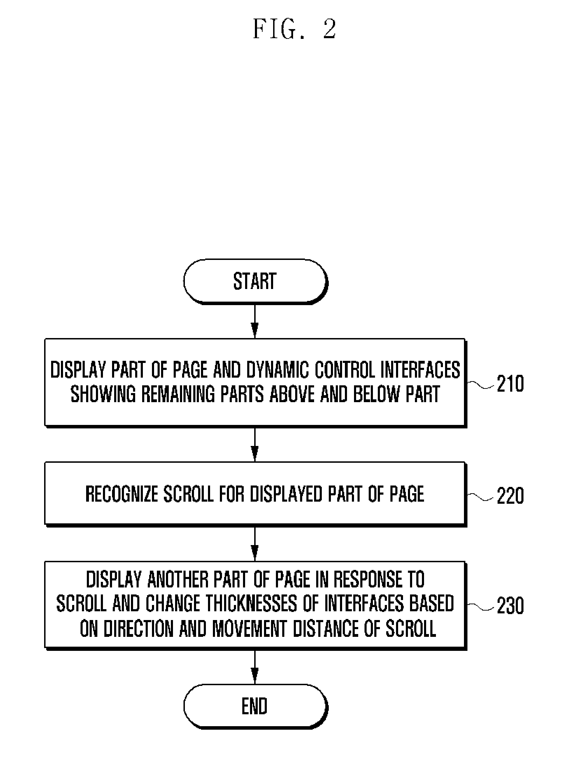

FIG. 2 is a flowchart of an example process of displaying a dynamic control interface according to an embodiment of the present disclosure.

Referring to FIG. 2, in operation 210, the controller 160 may control the display unit 220 to display a part of the page on the screen such that the width of the page fits the width of the screen. Further, the controller 160 may control the display unit 110 to display the front interface on an upper end of the screen and the rear interface on a lower end of the screen. The page may be execution images of various applications that are executable in the electronic device 100. For example, the page may be a webpage, an e-book, an electronic document, a chat window, a gallery, an e-mail, a memo or the like.

While the part of the page is displayed, the touch panel 111 may generate detection information in response to a hovering or a touch of the touch input device and transmit the generated detection information to the controller 160. Then, the controller 160 may analyze the detection information received from the touch panel 111. In operation 220, as a result of the analysis, the controller 160 may recognize generation of the scroll of the touch input device in the part of the displayed page.

In operation 230, the controller 160 may move the page in response to the scroll input and control the display unit 110 to display another part of the page. Further, the controller 160 may analyze the detection information received from the touch panel 111 and calculate a direction, a movement distance, a speed and the like of the scroll. In addition, the controller 160 may change a thickness of each of the interfaces based on the calculated value and control the display unit 110 to display the interfaces having the changed thicknesses. When the direction of the scroll is an up direction, the controller 160 may change the front interface to be thicker and the rear interface to be thinner. When the direction of the scroll is a down direction, the controller 160 may change the front interface to be thinner and the rear interface to be thicker. At this time, the controller 160 may change the thickness based on the movement distance of the scroll. For example, when the direction of the scroll is the up direction, the controller 160 may change the front interface to be thicker and the rear interface to be thinner in proportion to the calculated movement distance. Further, the thickness may be changed based on the speed of the scroll. That is, as the scroll is faster, one of the interfaces more quickly becomes thicker and the other more quickly becomes thinner.

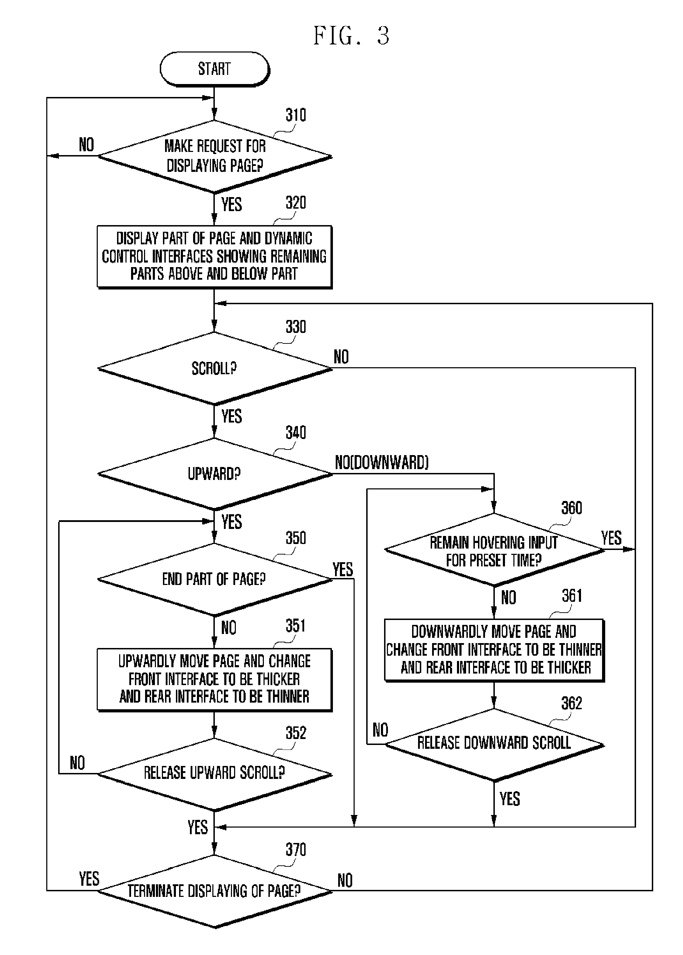

FIG. 3 is a flowchart of another example process of displaying the dynamic control interface according to an embodiment of the present disclosure.

Referring to FIG. 3, in operation 310, the controller 160 identifies whether a user input request for displaying the page is detected. For example, the user input may be selecting (for example, tapping the icon by using a touch input device) an application icon that is displayed on the home screen. Further, the user input may be a voice command event input through the microphone 142 or the microphone of the earphone 144.

When the user input request for displaying the page is detected in operation 310, the controller 160 may control the display unit 110 to display a part of the page and interfaces on an upper portion and a lower portion of the part in operation 320.

In operation 330, the controller 160 may determine whether a scroll is generated on the displayed part through an analysis of the detection information received from the touch panel 111. When it is determined that the scroll is not generated, the process may proceed to operation 370.

When it is determined that the scroll is generated in operation 330, the controller 160 may determine a direction of the scroll through the analysis of the detection information in operation 340. When the direction of the scroll is determined to be in the upward direction in operation 340, the process may proceed to operation 350. When the direction of the scroll is determined to be in the down direction in operation 340, the process may proceed to operation 360.

In operation 350, the controller 160 identifies whether the displayed part is an end part of the corresponding page. When the displayed part is the end part as a result of the identification in operation 350, the process may proceed to operation 370. When the displayed part is the end part as a result of the identification in operation 350, the process may proceed to operation 351.

In operation 351, the controller 160 may upwardly move the page and control the display unit 110 to display other parts (that is, parts below the currently displayed part). Further, the controller 160 may change the front interface to be thicker and the rear interface to be thinner. In operation 352, the controller 160 may determine whether the scroll is upwardly released through the analysis of the detection information. When it is determined that the scroll is released (for example, when the touch of the touch input device is released from the screen or the movement of the touch input device is stopped while the touch input device touches the screen), the process may proceed to operation 370. When it is determined that the scroll is not released, the process may proceed to operation 350.

In operation 360, the controller 160 identifies whether the displayed part is a beginning part of the page. When the displayed part is the beginning part as a result of the identification in operation 360, the process may proceed to operation 370. When the displayed part is not the beginning part as a result of the identification in operation 360, the process may proceed to operation 361.

In operation 361, the controller 160 may downwardly move the page and control the display unit 110 to display other parts (that is, parts above the currently displayed part). Further, the controller 160 may change the front interface to be thinner and the rear interface to be thicker. In operation 362, the controller 160 may determine whether the scroll is downwardly released through the analysis of the detection information. When it is determined that the scroll is released, the process may proceed to operation 370. When it is determined that the scroll is not released, the process may return to operation 360.

In operation 370, the controller 160 identifies whether a user input request for terminating the displaying of the page is detected. When the user input request for terminating the displaying is detected, the displaying of the page is terminated and the process may return to operation 310. When the user input request for terminating the displaying is not detected, the process may return to operation 330.

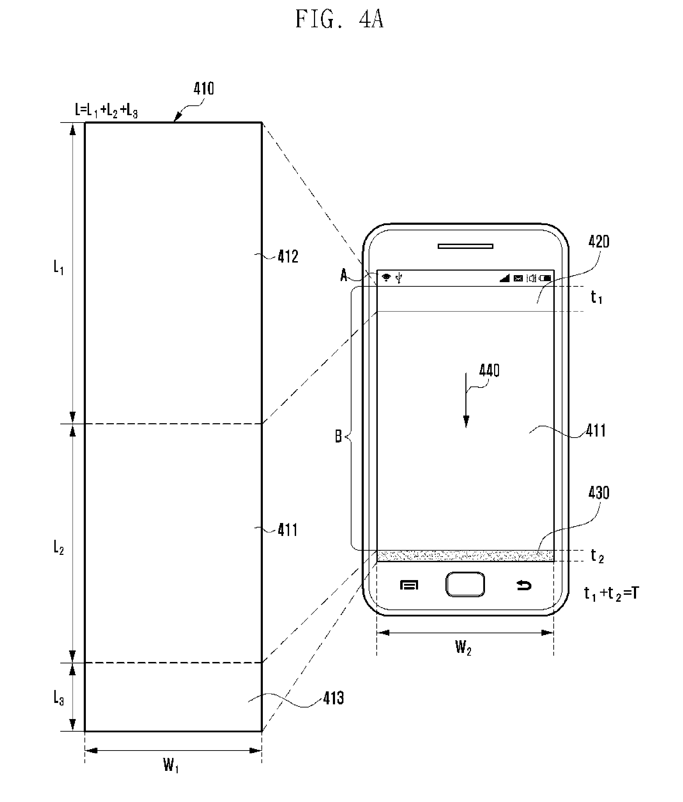

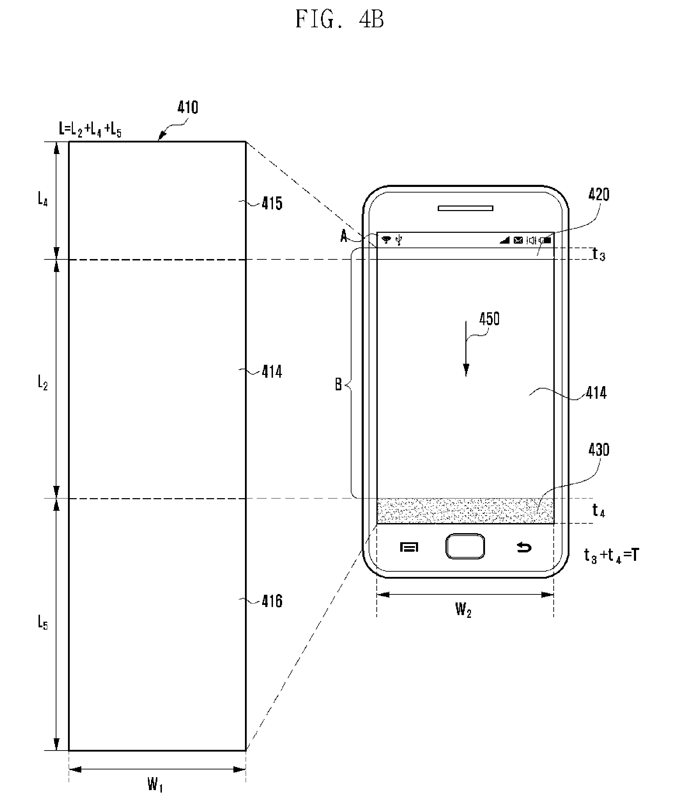

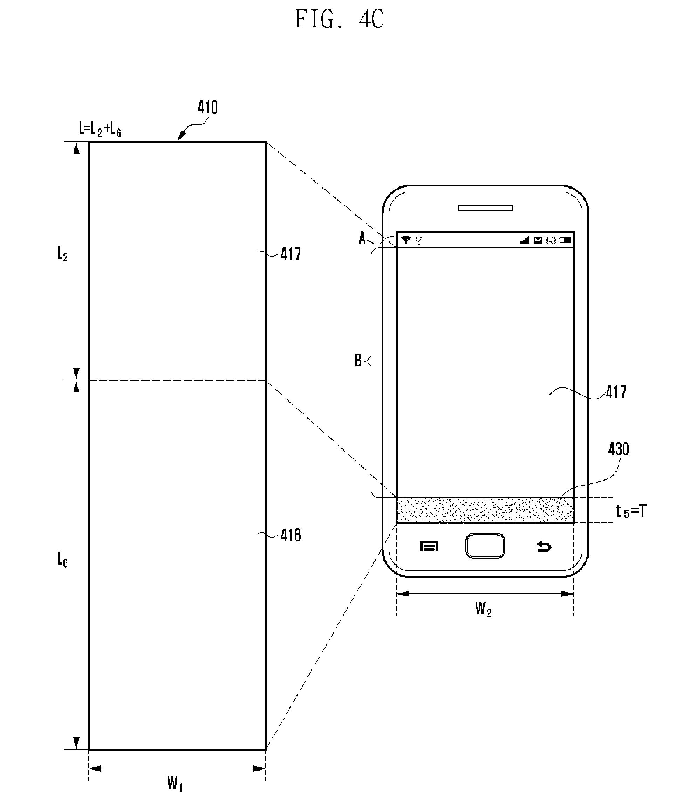

FIGS. 4A, 4B, and 4C illustrate screens displaying the dynamic control interface according to an embodiment of the present disclosure.

Referring to FIG. 4A, the display unit 110 may display a first part 411 on a page screen B such that a width w1 of a page 410 fits a width w2 of the page screen B. At this time, the controller 160 may enlarge or reduce the page 410 in order to allow the width w1 of the page 410 to fit the width w2 of the page screen B. For example, if w1>w2, the controller 160 reduces the width w1 of the page 410 to fit the width w2 of the page screen B. Further, the controller 160 may reduce the length L of the page 410 according to the reduction of the width w1. Meanwhile, a display area according to a reference numeral A in the screen of the display unit 110 may be a status screen. Further, the display unit 110 may display a front interface 420 corresponding to an upper portion 412 of a first part 411 on an upper end of the page screen B. In addition, the display unit 110 may display a rear interface 430 corresponding to a lower portion 413 of the first part 411 on a lower end of the page screen B. A ratio of a length 11 of the upper portion 412 and a length 12 of the lower portion 413 and a ratio of a thickness t1 of the front interface and a thickness t2 of the rear interface 430 may be the same. That is, an equation of 11 : 12 = t1 : t2 may be achieved. Accordingly, the user may recognize a position of the first part 411 of the page 410 through the ratio of the thicknesses. Further, the user may discern that the upper portion 411 and the lower portion are compressed and displayed as the front interface 420 and the rear interface 430, respectively.

Referring to FIG. 4B, when a first scroll 440 (see FIG. 4A) is made, the controller 160 downwardly moves the page 410 in response to the first scroll 440. Accordingly, the display unit 110 may display a second part 414 above the first part 411 on the page screen B. Further, the display unit 110 displays the front interface 420 corresponding to an upper portion 415 of the second part 414 on the upper end of the page screen B and the rear interface 430 corresponding to a lower portion 416 of the second part 414 on a lower end of the page screen B. In a comparison between FIGS. 4A and 4B, the thickness of the front interface 420 is reduced from t1 to t3, and the thickness of the rear interface 430 is increased from t2 to t4. As described above, there is a change in the thickness but a sum of the thicknesses T(=t1+t2=t3+t4) is the same.

Referring to FIG. 4C, when a second scroll 450 (see FIG. 4B) is made, the controller 160 downwardly moves the page 410 again in response to the second scroll 460. Accordingly, the display unit 110 may display a third part, that is, a beginning part 417 above the second part 414 on the page screen B. Further, the display unit 110 removes the front interface 420 from the upper end of the page screen B. Accordingly, the user may recognize that the beginning part 417 of the page 410 is being displayed. Further, the display unit 110 displays the rear interface 430 corresponding to a lower portion 418 of the beginning part 417 on the lower end of the page screen B. In a comparison between FIGS. 4B and 4C, the thickness of the rear interface 430 is increased from t4 to t5. As described above, there is a change in the thickness but t5 is equal to T.

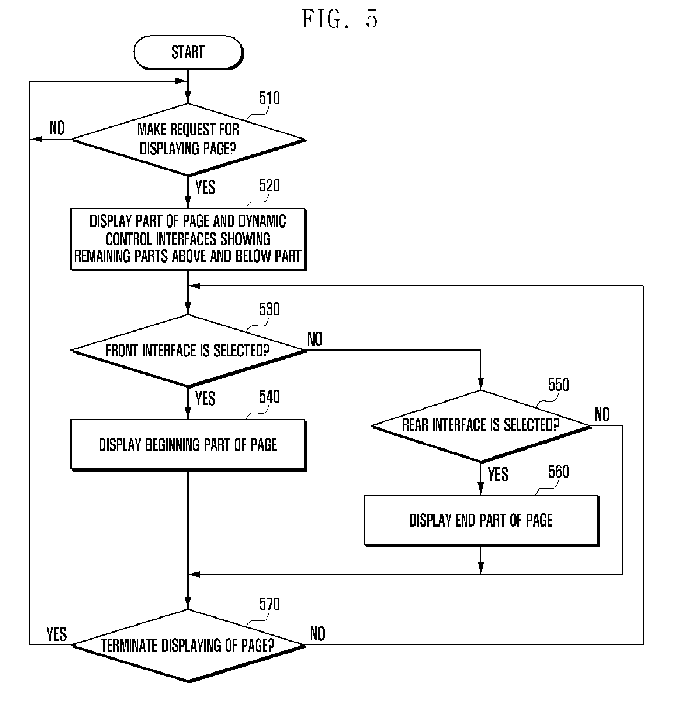

FIG. 5 is a flowchart of an example process of displaying a beginning part and an end part of a page according to an embodiment of the present disclosure.

Referring to FIG. 5, in operation 510, the controller 160 identifies whether a user input request for displaying the page is detected.

When the user input for making the request for displaying the page is detected in operation 510, the controller 160 may control the display unit 110 to display a part of the page and interfaces on an upper portion and a lower portion of the part in operation 520.

In operation 530, the controller 160 may identify whether a user input (for example, tapping the front interface by using the touch input device) of selecting the front interface is detected. When the user input of selecting the front interface is detected in operation 530, the controller 160 may control the display unit 110 to display a beginning part of the page in operation 540. Referring back to FIGS. 4A and 4C, when the user taps the front interface 420, the beginning part 417 is displayed on the page screen 417. After operation 540, after the beginning part is displayed, the process may proceed to operation 570. When the user input of selecting the front interface is not detected in operation 530, the process may proceed to operation 550.

In operation 550, the controller 160 may identify whether a user input (for example, tapping the rear interface by using the touch input device) of selecting the rear interface is detected. When the user input of selecting the rear interface is detected in operation 550, the controller 160 may control the display unit 110 to display an end part of the page in operation 560. After operation 560, the process may proceed to operation 570. When the user input of selecting the rear interface is not detected in operation 550, the process may proceed to operation 570.

In operation 570, the controller 160 identifies whether a user input for terminating the displaying of the page is detected. When the user input request for terminating the displaying is detected, the displaying of the page is terminated and the process may return to operation 510. When the user input for making the request for terminating the displaying is not detected, the process may return to operation 530.

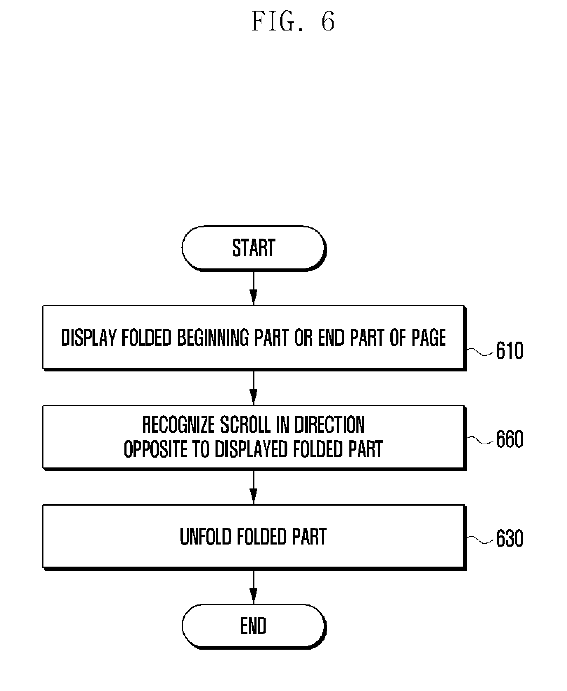

FIG. 6 is a flowchart of an example process of displaying a folded part of the page in an unfolded form according to an embodiment of the present disclosure.

Referring to FIG. 6, in operation 610, the controller 160 may control the display unit 110 to display a beginning part or an end part of the page. Particularly, the controller 160 may control the display unit 110 to display a part to be displayed (that is, the beginning part or the end part) in a form as if one piece of paper is folded many times. Accordingly, the user may recognize the displayed part as the beginning part or the end part of the page. The page may be execution images of various applications executable in the electronic device 100. For example, the page may be a webpage, an e-book, an electronic document, a chatting window, a gallery, an e-mail, a memo or the like.

As described above, while the beginning part or the end part of the page is displayed, the touch panel 111 may generate detection information in response to a hovering or a touch of the touch input device and transmit the generated detection information to the controller 160. Then, the controller 160 may analyze the detection information. In operation 620, as a result of the analysis, the controller 160 may recognize that a scroll input is generated in a direction opposite to the displayed folded part. In operation 630, the controller 160 may control the display unit 110 to display the folded part in an unfolded form in response to the scroll input.

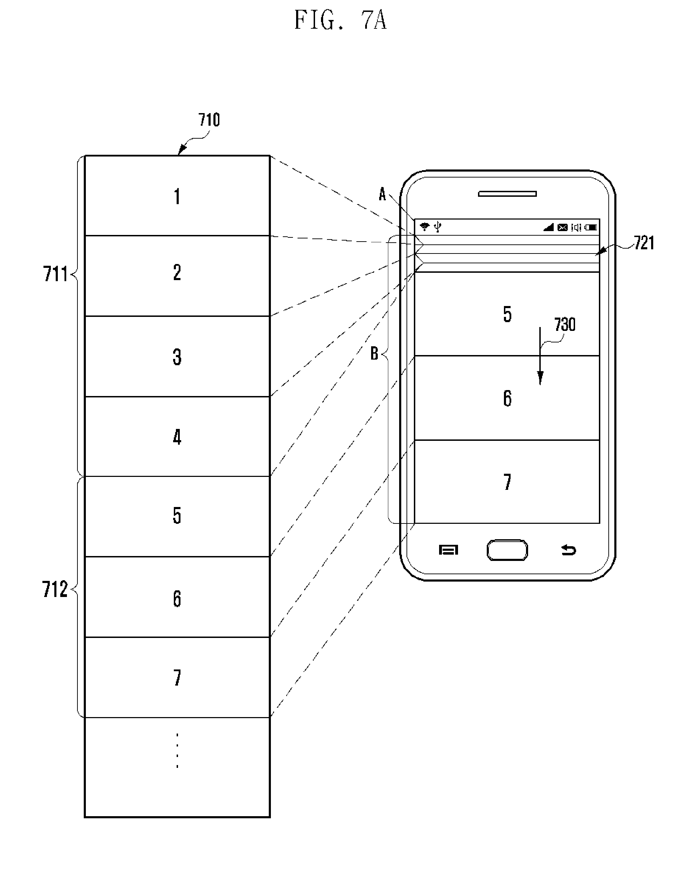

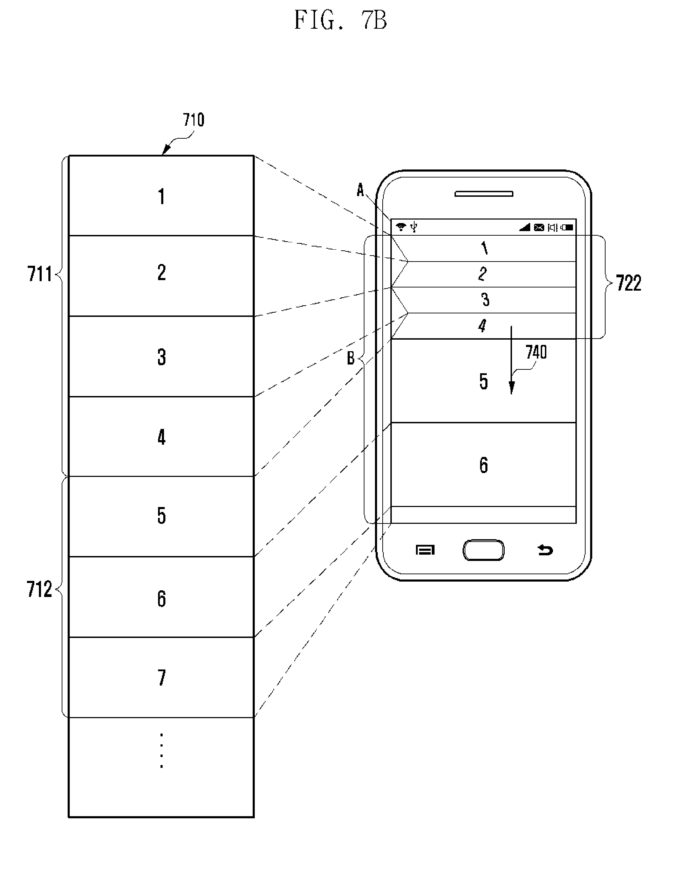

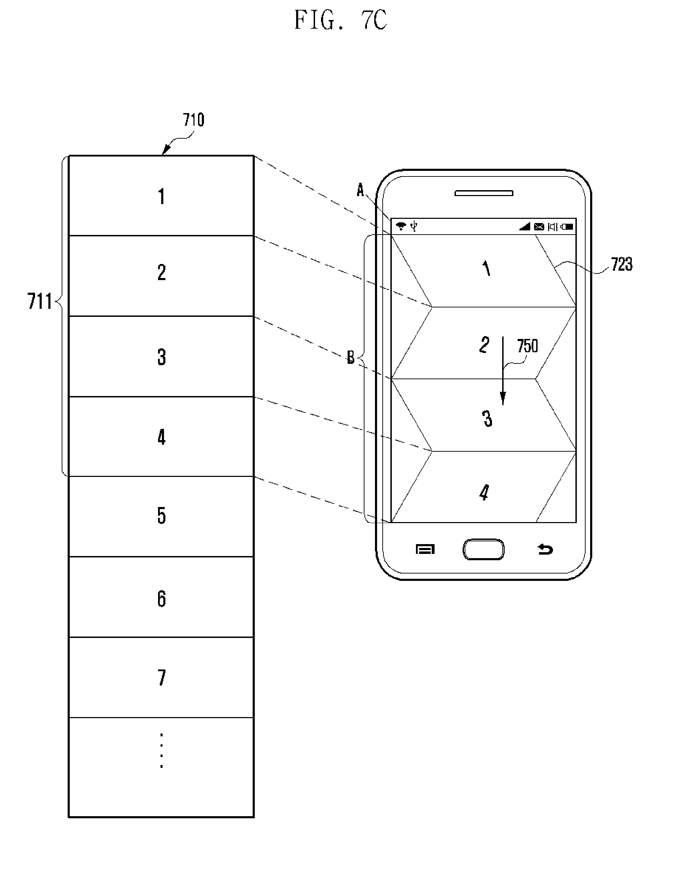

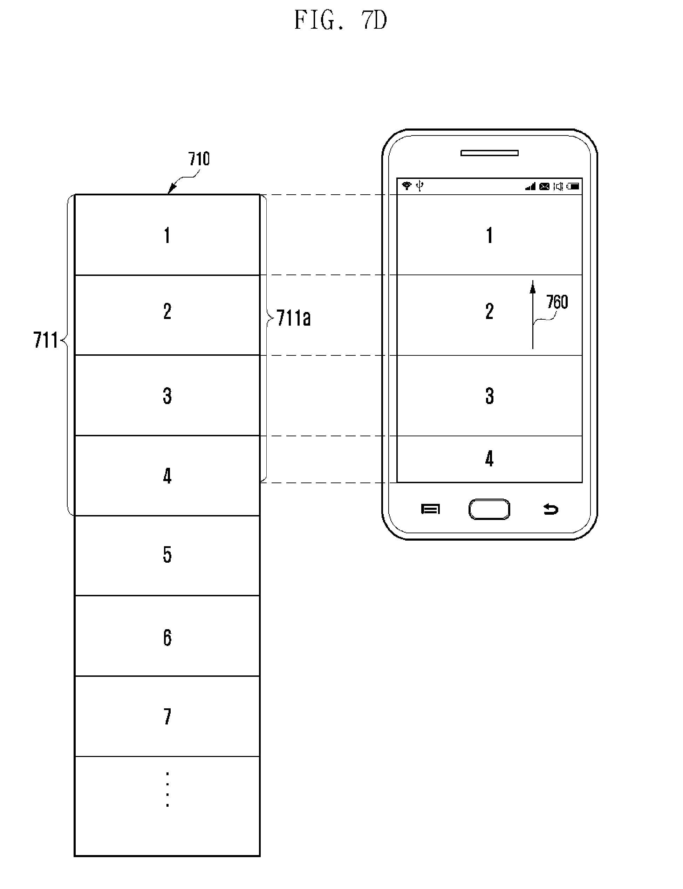

FIGS. 7A, 7B, 7C, and 7D are screens illustrating folding a beginning part of the page in a form as if paper is folded many times and then unfolding the beginning part of the page according to an embodiment of the present disclosure.

Referring to FIG. 7A, the display unit 110 displays a beginning part 711 of a page 710 and a lower part 712 on the page screen B. The beginning part 711 is displayed on the page screen B in a folded form 721. Accordingly, the user may recognize the folded form 721 as the beginning part 711.

Referring to FIG. 7B, when a first scroll 730 (see FIG. 7A) is made, the controller 160 unfolds the beginning part 711 in response to the first scroll 730. That is, the controller 160 controls the display unit 110 to display the beginning part 711 on the page screen B in a less folded form 722 in comparison with FIG. 7A.

Referring to FIG. 7C, when a second downward scroll 740 (see FIG. 7B) is made, the controller 160 unfolds the beginning part 711 more in comparison with FIG. 7B in response to the second scroll 740. That is, the display unit 110 displays the beginning part 711 on the page screen B in a less folded form 723 in comparison with FIG. 7B under a control of the controller 160.

Referring to FIG. 7D, when a third downward scroll 750 (see FIG. 7C) is made, the controller 160 completely unfolds the beginning part 711 (that is, reconstructs the beginning part 711 to the original form) in response to the third scroll 750. That is, the display unit 110 reconstructs the beginning part 711 to the original form and displays a part 711 a of the beginning part 711 on the page screen B.

A degree by which the beginning part 711 is reconstructed may be determined, for example, according to a movement distance of the scroll input. For example, when the generation of the downward scroll is recognized, the controller 160 may calculate a movement distance by analyzing detection information and unfold the beginning part 711 by the calculated value. In another example, a degree by which the beginning part 711 is unfolded may be determined according to a speed of the scroll. For example, when the generation of the downward scroll is recognized, the controller 160 may calculate the speed by analyzing detection information received from the touch panel 110. When the calculated value is larger than a preset value, the controller 160 may completely unfold the beginning part 711 as illustrated in FIG. 7D.

Meanwhile, when an upward scroll 760 is generated in the page screen B as illustrated in FIG. 7D, the controller 160 folds the beginning part 711 in response to the scroll 760. For example, the controller 160 may control the display unit 110 to display the beginning part 711 on the page screen B in a folded form 723 in response to the scroll 760 as illustrated in FIG. 7D. When the upward scroll is continuously generated, the beginning part 711 may be displayed in a maximally folded form 721 as illustrated in FIG. 7A. As described above, a degree by which the beginning part 711 is transformed may be determined according to the movement distance or the speed.

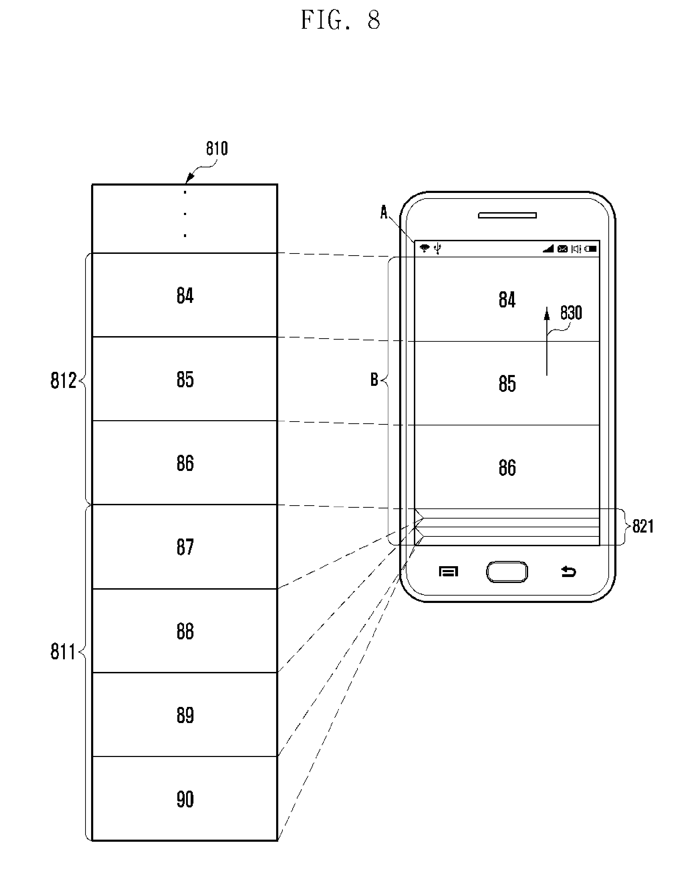

FIG. 8 is a screen illustrating a folded end part of the page according to an embodiment of the present disclosure.

Referring to FIG. 8, the display unit 110 displays an end part 811 of a page 810 and an upper part 812 on the page screen B under a control of the controller 160. The end part 811 is displayed on the page screen B in a folded form 821. Accordingly, the user may recognize the folded form 821 as the end part 811. When an upward scroll 830 is generated, the controller 160 unfolds the end part 811 in response to the scroll 830. When the upward scroll is continuously generated, the controller 160 completely unfolds the end part 811. As described above, a degree by which the end part 811 is reconstructed may be determined according to the movement distance or the speed.

Meanwhile, when a downward scroll is generated when the end part 811 is completely unfolded or is unfolded somewhat, the controller 160 folds the end part 811 in response to the downward scroll. As described above, a degree by which the end part 811 is transformed may be determined according to the movement distance or the speed.

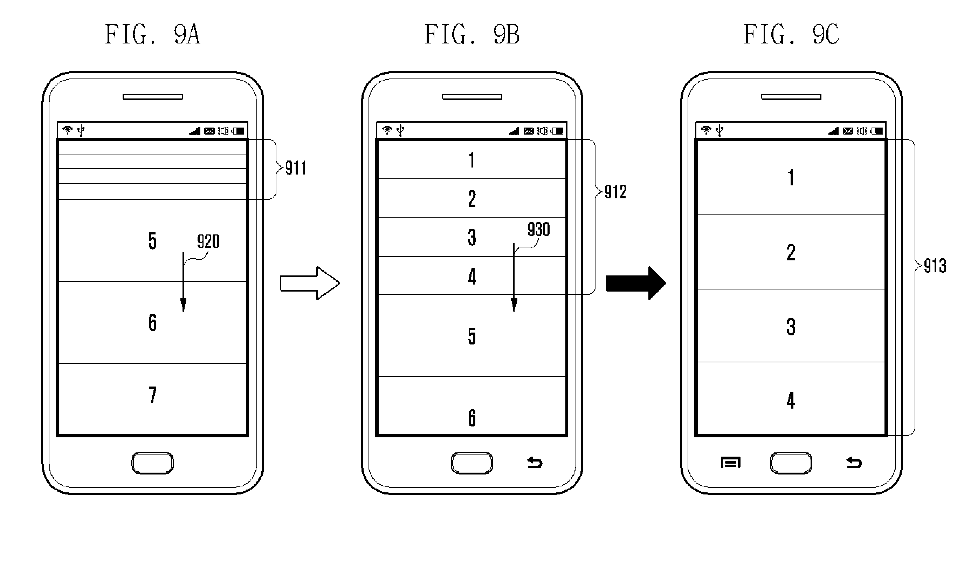

FIGS. 9A, 9B, and 9C are views illustrating reconstructing a reduced beginning part of the page as an original size according to an embodiment of the present disclosure.

Referring to FIGS. 9A to 9C, the display unit 110 displays a beginning part of the page in a reduced form 911 as illustrated in FIG. 9A. When a first downward scroll 920 is generated, the controller 160 enlarges the beginning part more in comparison with FIG. 9A, as indicated by a reference numeral 912 in FIG. 9B. When a second downward scroll 930 is generated, the controller 160 reconstructs the beginning part to the original size as indicated by a reference numeral 913 in FIG. 9C.

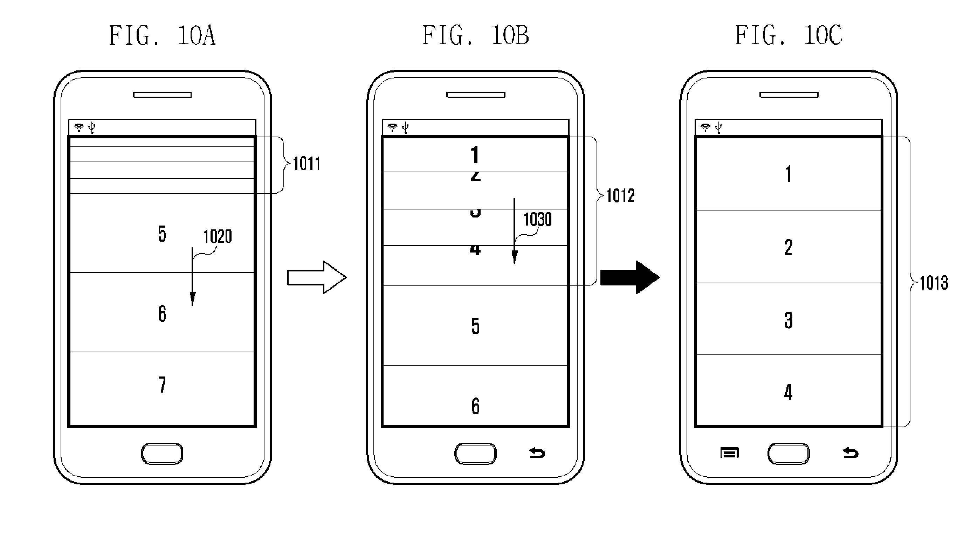

FIGS. 10A, 10B, and 10C are views describing a process of overlapping a beginning part of the page in a form as if cards overlap each other and then expanding the beginning part according to an embodiment of the present disclosure.

Referring to FIGS. 10A to 10C, the display unit 110 displays a beginning part of the page in a form 1011 in which cards overlap each other as illustrated in FIG. 10A. When a first downward scroll 1020 is generated, the controller 160 unfolds the beginning part as indicated by a reference numeral 1012 in FIG. 10B. When a second downward scroll 1030 is generated, the controller 160 reconstructs the beginning part to the original form as indicated by a reference numeral 1013 in FIG. 10C.

The method according to the present disclosure as described above may be implemented as a program command which can be executed through various computers and recorded in a computer-readable recording medium. The recording medium may include a program command, a data file, and a data structure. The program command may be specially designed and configured for the present disclosure or may be used after being made known to those skilled in computer software fields. The recording medium may include magnetic media such as a hard disk, a floppy disk and a magnetic tape, optical media such as a Compact Disc Read-Only Memory (CD-ROM) and a Digital Versatile Disc (DVD), magneto-optical media such as a floptical disk, and hardware devices such as a ROM, a RAM and a flash memory. Further, the program command includes a machine language code generated by a compiler and a high-level language code executable by a computer through an interpreter and the like.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying a page of an electronic device having a touch panel installed in a screen, the method comprising:
displaying a part of the page and interfaces indicating remaining parts of the page above and below the part on the screen;
recognizing a scroll input for the part of the page through the touch panel; and
displaying another part of the page in response to the scroll input and changing one of the interfaces to be thicker and the other to be thinner based on a direction of the scroll input.

2. The method of claim 1, further comprising:
removing a front interface of the interfaces when a beginning part of the page is displayed; and
removing a rear interface of the interfaces when an end part of the page is displayed.

3. The method of claim 2, further comprising:
displaying the beginning part on the screen in response to a user input of selecting the front interface; and
displaying the end part on the screen in response to a user input of selecting the rear interface.

4. The method of claim 1, further comprising:
transforming one of a beginning part and an end part of the page and displaying the transformed part on the screen; and
reconstructing the displayed transformed part in response to a scroll input in a direction opposite to the displayed transformed part and displaying the reconstructed part on the screen.

5. The method of claim 4, further comprising determining a degree of the reconstruction based on at least one of a movement distance and a speed of the scroll input in the direction opposite to the displayed transformed part.

6. The method of claim 4, wherein a transformed form is a folded form, a reduced form, or an overlapping form.

7. The method of claim 1, further comprising:
displaying one of a beginning part and an end part of the page on the screen; and
transforming the displayed part in response to a scroll input in a direction of the displayed part and displaying the transformed part on the screen.

8. The method of claim 7, further comprising determining a degree of the transformation based on at least one of a movement distance and a speed of the scroll input in the direction of the displayed part.

9. The method of claim 7, wherein a transformed form is a folded form, a reduced form, or an overlapping form.

10. An electronic device comprising:
a display unit having a touch panel installed in a screen;
a memory configured to store a display control module set to control an operation of displaying a part of the page and interfaces indicating remaining parts above and below the part on the screen, an operation of recognizing a scroll input for the part of the page through the touch panel, and an operation of displaying another part of the page in response to the scroll input and changing one of the interfaces to be thicker and the other to be thinner based on a direction of the scroll input; and
a processor for executing the display control module.

11. The electronic device of claim 10, wherein the display control module is set to control an operation of removing a front interface of the interfaces when a beginning part of the page is displayed and an operation of removing a rear interface of the interfaces when an end part of the page is displayed.

12. The electronic device of claim 11, wherein the display control module is set to control an operation of displaying the beginning part on the screen in response to a user input of selecting the front interface and an operation of displaying the end part on the screen in response to a user input of selecting the rear interface.

13. The electronic device of claim 10, wherein the display control module is set to control an operation of transforming one of a beginning part and an end part of the page and displaying the transformed part on the screen and an operation of reconstructing the displayed transformed part in response to a scroll input in a direction opposite to the displayed transformed part and displaying the reconstructed part on the screen.

14. The electronic device of claim 13, wherein the display control module is set to control an operation of determining a degree of the reconstruction based on at least one of a movement distance and a speed of the scroll input in the direction opposite to the displayed transformed part.

15. The electronic device of claim 10, wherein the display control module is set to control an operation of displaying one of a beginning part and an end part of the page on the screen and an operation of transforming the displayed part in response to a scroll input in a direction of the displayed part and displaying the transformed part on the screen.
